# FASCICULE DE BREVET EUROPEEN

(11) **EP 3 152 404 B1**
(45) Date de publication et mention de la délivrance du brevet: **01.08.2018**
(21) Numéro de dépôt: 15732842.8
(22) Date de dépôt: 03.06.2015
(51) Int. Cl.: F01D 5/32, F01D 5/22, F01D 5/14, F01D 5/02, F01D 5/30, F01D 11/00

(54) **ROTOR POUR TURBOMACHINE COMPORTANT DES AUBES A PLATES FORMES RAPPORTÉES**
ROTOR FÜR EINEN TURBINENMOTOR MIT SCHAUFELN MIT ZUSÄTZLICHEN PLATTFORMEN
ROTOR FOR TURBINE ENGINE COMPRISING BLADES WITH ADDED PLATFORMS

(30) Priorité: 03.06.2014 FR 1455017
(43) Date de publication de la demande: 12.04.2017
(73) Titulaire: SAFRAN AIRCRAFT ENGINES, 75015 Paris (FR)
(72) Inventeur: TRAPPIER, Nicolas, F-94700 Maisons Alfort (FR); BEAUJARD, Antoine, Jean-Philippe, F-94550 Chevilly Larue (FR)
(74) Mandataire: Cabinet Camus Lebkiri
(86) Numéro de dépôt international: PCT/FR2015/051471
(87) Numéro de publication internationale: WO 2015/185860

(56) Documents cités:
- FR-A- 1 426 933
- FR-A1- 2 524 933
- FR-A1- 2 918 409
- US-A- 4 033 705

## Description

### DOMAINE TECHNIQUE DE L'INVENTION

Le domaine technique de l'invention est celui des rotors pour turbomachine, telle que par exemple un turboréacteur ou un turbopropulseur d'avion comportant une pluralité d'aubes à plates-formes déportées. Ces rotors sont notamment destinés à une soufflante, à un étage de compression ou encore à un étage de turbine haute ou basse pression d'une turbomachine.

L'invention vise plus particulièrement les plates-formes d'aubes d'un rotor pour un étage de turbine haute ou basse pression d'une turbomachine, mais elle peut s'appliquer également à des plates-formes d'autres ensembles rotatifs de la turbomachine, comme par exemple la soufflante ou encore l'étage de compression.

### ARRIERE-PLAN TECHNOLOGIQUE DE L'INVENTION

Classiquement, un rotor, par exemple d'une turbine basse ou haute pression, comporte un disque, une série d'aubes radiales montées dans des logements axiaux, appelés alvéoles, réalisés à la périphérie du disque, et une série de plates-formes qui forment une veine annulaire dans laquelle circule le gaz traversant la turbine.

Les aubes, notamment les aubes de turbine, sont classiquement réalisées en métal en une seule pièce de fonderie. La fabrication des aubes par fonderie permet d'obtenir des bonnes tolérances dimensionnelles mais en revanche les aubes métalliques présentent un inconvénient majeur : leur masse importante.

Afin de remédier à ce problème de masse, et dans un objectif général de réduction des masses d'un rotor de turbomachine, il a été proposé de réaliser des aubes en matériau composite à matrice céramique (CMC). Cependant, la fabrication de telles aubes en CMC est relativement complexe et mal maîtrisée, notamment au niveau de la réalisation du pied des aubes et au niveau des plates-formes.

Ainsi, historiquement, afin de faciliter la fabrication de ces aubes, il a été proposé de réaliser séparément les plates-formes des aubes et de les assembler ensuite sur le disque. Ainsi, différents systèmes de fixation des plates-formes rapportées sur les disques ont été développés.

Par exemple, le document EP1306523 décrit un rotor comportant un disque pourvu d'alvéoles, dans lesquelles sont fixées à la fois les aubes et les plates-formes.

Le document FR2608674 propose une alternative par rapport au document précédent. Le document décrit un rotor pour turbomachine comportant un disque pourvu d'alvéoles primaires dans lesquelles sont insérées axialement les pieds d'aube en céramique composite et pourvu d'alvéoles secondaires dans lesquelles sont insérées axialement des bulbes formant des moyens d'attache des plates-formes rapportées sur le disque. Cependant, dans la configuration décrite dans le document, des gaz peuvent s'infiltrer entre les plates-formes et le disque, notamment au niveau des alvéoles du disque, ce qui a pour effet de détériorer le disque. De plus, la géométrie proposée engendre un montage/démontage complexe. FR2524933 décrit une turbomachine selon le préambule de la revendication 1. Malgré l'intérêt des plates-formes rapportées connue dans l'état de la technique qui permettent par ailleurs de faciliter le montage et le démontage du rotor aucune solution n'a été proposée pour réduire de manière significative les contraintes au niveau du disque d'un rotor comportant une pluralité d'aubes métalliques.

### DESCRIPTION GENERALE DE L'INVENTION

Dans ce contexte, l'invention a notamment pour but d'apporter une solution simple, efficace et économique à ce problème en proposant un rotor à aubes métalliques, dont le processus de fabrication est maîtrisé, limitant les contraintes du disque au niveau des attaches des aubes.

A cette fin, l'invention propose un rotor pour turbomachine selon la revendication 1. Ainsi, le rotor selon l'invention présente plusieurs avantages :
- l'invention propose un mode de fixation des plates-formes rapportées qui permet de s'affranchir d'une fixation dans les alvéoles du disque qui contiennent les bulbes des aubes de manière à limiter les contraintes dans le bulbe et ainsi augmenter le nombre d'aube. ;
- les plates-formes rapportées de forme rectiligne coopérant avec les aubes permettent de faciliter le montage/démontage des aubes ainsi que des plates-formes ; en effet, contrairement au rotor du document FR2608674 selon l'état de la technique qui nécessite de monter simultanément l'ensemble des aubes et des plates-formes, il est désormais possible grâce à l'invention d'effectuer un montage/démontage des aubes seules, puis un montage/démontage des plates-formes ou encore un montage alterné d'une aube puis d'une plate-forme.

Avantageusement, les plates-formes rapportées présentant un plateau rectiligne et des becquets intégrés ainsi que le mode de fixation des plates-formes sur le disque dans des alvéoles secondaires permet, pour une architecture donnée, de rendre possible le montage avec une géométrie d'aube présentant une hauteur d'échasse réduite par rapport aux aubes connues. La réduction de la hauteur relative de l'échasse au niveau du pied de l'aube permet ainsi de réduire la masse totale de chaque aube métallique du rotor. Par conséquent, grâce à la réduction de masse des aubes, les contraintes au niveau des attaches des aubes sont réduites.

Le montage d'une telle aube avec une hauteur d'échasse réduite (en d'autres termes avec un bulbe plus proche de la pale) est permis grâce à l'utilisation combinée des plates-formes rectilignes rapportées présentant avantageusement une première série intégrant les becquets amont et une deuxième série intégrant les becquets aval, ainsi qu'à leur mode de fixation axial et radial sur le disque, notamment via des alvéoles secondaires. Bien entendu, les dimensions du disque du rotor sont adaptées pour permettre le montage de l'ensemble. Ainsi, grâce à l'invention, il est possible de réaliser un montage en ayant un becquet radialement positionnée au même niveau que le bulbe de l'aube ou encore à un niveau inférieur de celui-ci.

Ainsi, le rotor selon l'invention permet de répondre aux problèmes de sollicitations du disque en fonctionnement et permet de réaliser une réduction de masse de l'ordre de 20% par rapport aux rotors à aubes métalliques connus de l'état de la technique.

La géométrie particulière de l'invention permet également de réaliser, grâce aux becquets, un recouvrement thermique efficace sans modification de l'architecture environnante, et particulièrement du stator de la turbine.

Avantageusement, les plates-formes sont formées par :
- une première série, dites plates-formes amont, présentant un becquet amont s'étendant sensiblement axialement vers l'amont, ledit becquet amont formant un secteur annulaire disposé en regard d'au moins deux aubes consécutives ;
- une deuxième série, dites plates-formes aval, présentant un becquet aval s'étendant sensiblement axialement vers l'aval, ledit becquet aval formant un secteur annulaire disposé en regard d'au moins deux aubes consécutives ;
les deux séries de plates-formes étant positionnées alternativement dans les alvéoles secondaires.

Outre les caractéristiques qui viennent d'être évoquées dans le paragraphe précédent, le rotor selon l'invention peut présenter une ou plusieurs caractéristiques complémentaires parmi les suivantes, considérées individuellement ou selon toutes les combinaisons techniquement possibles :
- chacune des plates-formes comporte :
   - un premier bord latéral rectiligne qui épouse le pied d'une première aube présentant une bordure rectiligne,
   - un deuxième bord latéral rectiligne qui épouse le pied d'une deuxième aube consécutive, présentant une bordure rectiligne ;
- les becquets amont des plates-formes amont et les becquets aval des plates-formes aval sont formés par une première paroi sensiblement radiale raccordée au plateau et par une seconde paroi sensiblement axiale ;
- la seconde paroi du becquet amont est radialement positionnée au même niveau que le bulbe de l'aube ou à un niveau inférieur du bulbe de l'aube ;
- chacune des plates-formes comporte :
   - une ouverture au niveau de ladite première paroi sensiblement radiale du becquet;
   - une paroi latérale orientée sensiblement radialement, située à une extrémité opposée du becquet ;
   chacune des parois latérales d'une série de plates-formes étant adaptée pour coopérer avec l'évidement de l'autre série de plates-formes ;
- les plates-formes sont métalliques ;
- les aubes sont métalliques.

L'invention a également pour objet une turbomachine comportant un rotor selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
La figure 1 est une vue en perspective d'une partie d'un rotor de turbomachine selon l'invention.
La figure 2 est une vue en perspective illustrant une plate-forme amont d'un rotor selon l'invention ;
La figure 3 est une vue en perspective illustrant une plate-forme aval d'un rotor selon l'invention ;
La figure 4 est une vue en perspective illustrant un pied d'aube d'un rotor selon l'invention ;
La figure 5 est une vue en coupe transversale illustrant une partie du disque du rotor selon l'invention.
La figure 6 est une vue en perspective d'une partie d'un rotor de turbomachine selon l'invention illustrant plus particulièrement un exemple de réalisation d'un moyen de maintien axial des plates-formes rapportées d'un rotor selon l'invention.

### DESCRIPTION DETAILLEE D'UN EXEMPLE DE REALISATION DE L'INVENTION

Sauf précision contraire, un même élément apparaissant sur des figures différentes présente une référence unique.

Les termes amont et aval sont définis par rapport au sens de circulation du fluide lors du fonctionnement de la turbomachine.

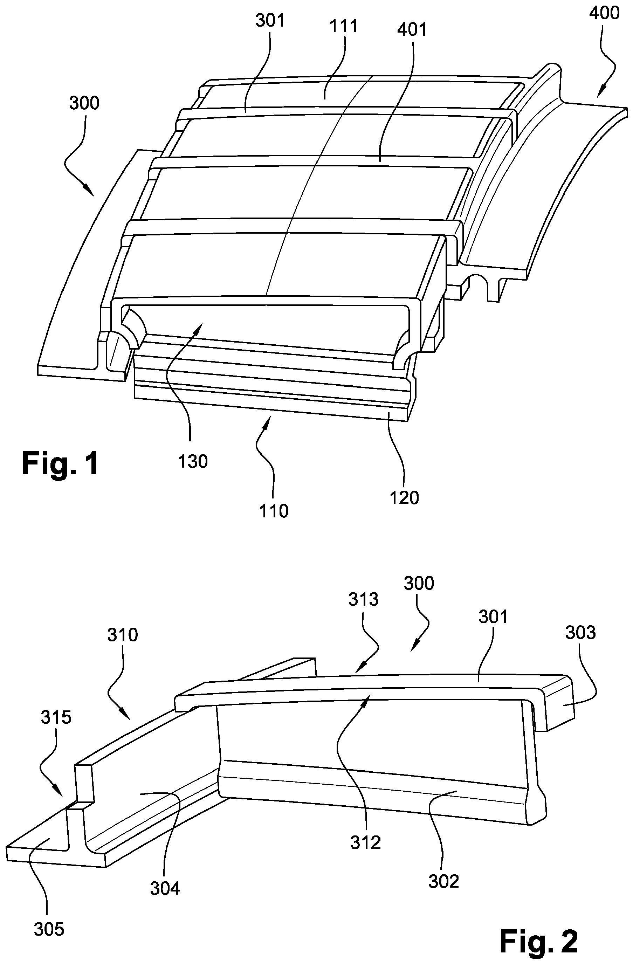

La figure 1 est une vue illustrant en perspective une partie d'un rotor de turbomachine selon l'invention. Plus précisément, la figure 1 illustre quatre pieds 110 d'aube 100 (les pales n'étant pas représentées) ainsi que quatre plates-formes rapportées 300, 400 positionnées entre les aubes 100, l'ensemble étant virtuellement en position dans un disque 600 (non représenté sur la figure 1) d'un ensemble rotatif formé par le rotor.

La figure 2 illustre plus particulièrement une plate-forme amont 300 d'un rotor selon l'invention.

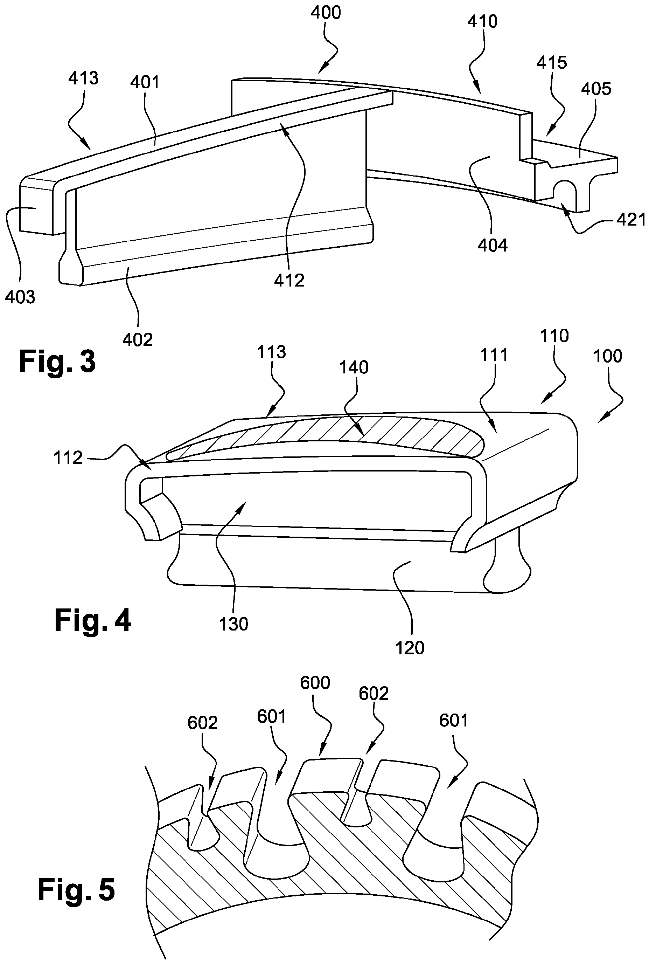

La figure 3 illustre plus particulièrement une plate-forme aval 400 d'un rotor selon l'invention.

La figure 4 illustre plus particulièrement un pied d'aube 110 d'un rotor selon l'invention.

Le rotor pour turbomachine, telle que par exemple un turboréacteur ou un turbopropulseur d'avion, comporte un disque annulaire 600, représenté en partie à la figure 5. La périphérie externe du disque 600 comporte une première pluralité d'alvéoles 601, dites alvéoles primaires (deux alvéoles primaires étant représentées à titre d'exemple à la figure 5), par exemple en forme de queue d'aronde, pour permettre le montage axial des pieds 110 d'aube 100. Le disque 600 comporte également à sa périphérie externe des alvéoles secondaires 602 positionnées entre deux alvéoles primaires consécutives 601. Les alvéoles secondaires 602 peuvent également présenter une forme de queue d'aronde ou toutes autres formes usuellement utilisées pour la fixation des aubes sur le disque 600. Selon le mode de réalisation représenté à la figure 5, les alvéoles secondaires 602 sont moins profondes que les alvéoles primaires 601 et sont de dimensions plus réduites.

Le rotor comporte également des aubes 100 formées par une pale (symbolisée à la figure 4 par le profil hachuré 140 représentant la section de la pale au niveau de sa liaison avec le pied d'aube 110) s'étendant radialement au-dessus d'un pied 110 présentant une échasse 130 et un bulbe 120 en partie inférieure, par exemple en forme de queue d'aronde, pour la fixation et le maintien des aubes 100 dans les alvéoles primaires 601 du disque 600. Bien entendu, les bulbes 120 des aubes présentent une forme complémentaire de la forme des alvéoles primaires 601 du disque 600. Le pied 110 des aubes 100 présente également en partie supérieure de l'échasse 130 un plateau 111, dit plateau intermédiaire d'aube, sensiblement de forme rectiligne et formant un « socle » de matière apte à assurer le maintien et la reprise des efforts subits par la pale.

Le rotor comporte également des plates-formes 300, 400 (illustrées plus particulièrement aux figures 2 et 3) qui sont des pièces rapportées, non solidaires des aubes, qui présentent une partie centrale 301, 401 formant un plateau, pouvant présenter une inclinaison par rapport à l'axe de révolution du rotor. Le plateau 301, 401 est prolongé d'une part par une paroi latérale 303, 403 s'étendant selon une direction radiale et d'autre part par un becquet 310, 410.

Les becquets 310, 410 intégrés aux plates-formes rapportées 300, 400 sont constitués par une première paroi 304, 404 s'étendant radialement, dite paroi radiale, directement raccordée au plateau 301, 401, et par une seconde paroi 305, 405, dite paroi axiale, rattachée à la première paroi 304, 404 et s'étendant selon une direction axiale. Les becquets 310, 410 de chaque plate-forme constituent des secteurs d'un ensemble annulaire formé par la pluralité de becquets en position sur le disque 600 du rotor. Selon un exemple de réalisation, la taille du secteur annulaire formé par le becquet de chaque plate-forme est déterminée de sorte que le becquet recouvre deux aubes consécutives.

Dans une réalisation alternative plusieurs plateformes peuvent être liées entre-elles par un becquet commun et ainsi s'étendre sur un secteur angulaire plus large et le becquet recouvrir plus de deux aubes consécutives. Un plus grand secteur angulaire permet de diminuer le nombre d'interface entre becquets et ainsi limiter les fuites d'air, cependant au-delà d'un certain secteur angulaire les contraintes de dilatation thermiques relatives deviennent limitantes.

Les plateaux 301, 401 sont reliés à un bulbe 302, 402 qui s'étend radialement sous les plates-formes 301, 401, et qui permet de verrouiller radialement les plates-formes 300, 400 dans les alvéoles secondaires 602 du disque annulaire 600. Selon un exemple de réalisation de l'invention, le bulbe 302, 402 des plates-formes 300, 400 est disposé au milieu du plateau 301, 401.

Le rotor selon l'invention comporte deux types de plates-formes : les plates-formes 300, dites amont, comportant un becquet 310 destiné à être positionné en amont des aubes, illustré notamment à la figure 2 et les plates-formes 400, dites aval, comportant un becquet 410 destiné à être positionné en aval des aubes, illustré notamment à la figure 3. Chaque type de plate-forme 300, 400 est positionné sur le disque 600 de manière alternée entre deux aubes 100 consécutives.

Lorsque les plates-formes rapportées 300, 400 sont en position dans les alvéoles secondaires 602 du disque 600 entre les aubes 100 comme illustré à la figure 1, les plateaux 301, 401 des plates-formes 300, 400 comblent l'espace entre les plateaux intermédiaires 111 des aubes 100. Ainsi, les bordures latérales rectilignes 312, 313, 412, 413 des plateaux 301, 302 sont adaptées pour épouser épousent les bordures latérales rectilignes 112, 113 des plateaux intermédiaires 111 des pieds des aubes 100.

Au niveau de la paroi radiale 304 du becquet 310 des plates-formes amont 300 est aménagé une ouverture 315, ou évidement, destiné à recevoir la paroi latérale 403 de la plate-forme aval 400 lorsque les plates-formes 300, 400 sont en position dans les alvéoles secondaires 602, de manière à former un becquet annulaire amont continu.

De manière identique, la paroi radiale 404 du becquet 410 des plates-formes aval 400 comporte une ouverture 415 destiné à recevoir la paroi latérale 303 de la plate-forme amont 300 lorsque les plates-formes 300, 400 sont en position, de manière à former un becquet annulaire aval continue.

Selon un premier mode de réalisation, le verrouillage axial des aubes et plates-formes 300, 400 rapportées dans les alvéoles secondaires 602 est réalisées classiquement par des moyens ad-hoc tels que par exemple des viroles annulaires venant bloquer les déplacements axiaux des aubes et des plates-formes 300, 400.

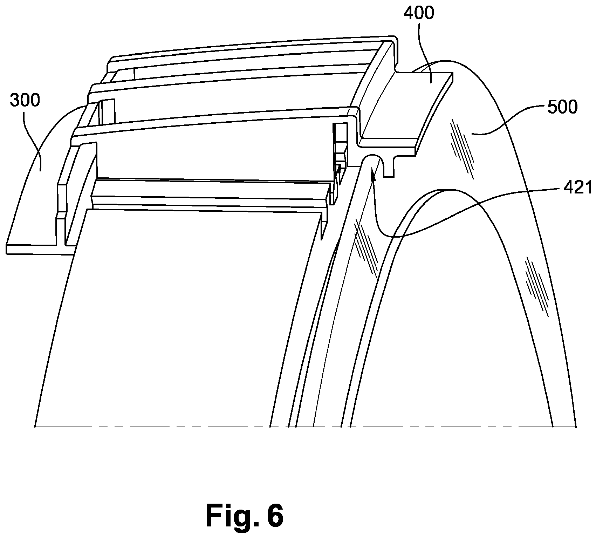

Selon un deuxième mode de réalisation illustré particulièrement à la figure 6, les plates-formes rapportées 300, 400 sont maintenues axialement au moyen d'un jonc annulaire fendu 500 et d'une virole annulaire (non représentée) venant en appui sur le jonc annulaire 500 de manière à bloquer sa position axiale. Pour cela, les plates-formes 300, 400 comportent des moyens de maintien formés par une gorge 421 de forme annulaire situé sur la partie avale des plates-formes et dont les dimensions sont adaptées pour recevoir et maintenir en position la partie périphérique extérieur du jonc annulaire fendu 500. Ainsi, les déplacements axiaux des plates-formes 300, 400 sont bloqués par le jonc annulaire 500 lorsque celui-ci est bridé par une virole annulaire classique au niveau de sa partie périphérique intérieure.

Selon ce mode de réalisation, les aubes sont maintenues axialement par les plates-formes rapportées 300, 400.

Avantageusement, les aubes et les plates-formes rapportées sont métalliques.

L'invention a été particulièrement décrite pour des aubes métalliques et des plates-formes métalliques ; toutefois, l'invention est également applicable à des aubes en matériau composite à matrice céramique (CMC) et/ou à des plates-formes en matériau composite à matrice céramique (CMC).

L'invention a été particulièrement décrite pour un étage de turbine haute ou basse pression d'une turbomachine ; toutefois, l'invention est également applicable à d'autres ensembles rotatifs de la turbomachine, comme par exemple la soufflante.

## Revendications

1. Rotor pour turbomachine comportant :
- un disque présentant à sa périphérie des alvéoles, dites alvéoles primaires ;
- une pluralité d'aubes (100) présentant un pied (110) constitué en partie inférieure par un bulbe (120) verrouillé dans lesdites alvéoles primaires ;
- une pluralité de plates-formes rapportées (300, 400), chacune étant disposée entre deux aubes (100) consécutives ;
ledit rotor étant **caractérisé en ce que** lesdites plates-formes (300, 400) présentent :
- un plateau (301, 401) sensiblement rectiligne et un bulbe (302, 402) s'étendant radialement sous le plateau (301, 401), ledit bulbe (302, 402) étant verrouillé dans des alvéoles secondaires agencées à la périphérie du disque, les alvéoles secondaires étant positionnées entre deux alvéoles primaires consécutives ;
- un becquet (310, 410) s'étendant sensiblement axialement, ledit becquet (310, 410) formant un secteur annulaire disposé en regard d'au moins deux aubes consécutives.

2. Rotor pour turbomachine selon la revendication précédente **caractérisé en ce que** lesdites plates-formes sont formées par :
- une première série (300), dites plates-formes amont, présentant un becquet amont (310) s'étendant sensiblement axialement vers l'amont, ledit becquet amont (310) formant un secteur annulaire disposé en regard d'au moins deux aubes consécutives ;
- une deuxième série (400), dites plates-formes aval, présentant un becquet aval (410) s'étendant sensiblement axialement vers l'aval, ledit becquet aval (410) formant un secteur annulaire disposé en regard d'au moins deux aubes consécutives ;
les deux séries de plates-formes (300, 400) étant positionnées alternativement dans les alvéoles secondaires.

3. Rotor pour turbomachine selon l'une des revendications précédentes **caractérisé en ce que** chacune des plates-formes comporte :
- un premier bord latéral rectiligne qui épouse le pied d'une première aube présentant une bordure rectiligne,
- un deuxième bord latéral rectiligne qui épouse le pied d'une deuxième aube consécutive, présentant une bordure rectiligne.

4. Rotor pour turbomachine selon les revendications 2 et 3 **caractérisé en ce que** les becquets amont (310) des plates-formes amont (300) et les becquets aval (410) des plates-formes aval (400) sont formés par une première paroi sensiblement radiale (304, 404) raccordée au plateau (301, 401) et par une seconde paroi (305, 405) sensiblement axiale.

5. Rotor pour turbomachine selon la revendication 4 **caractérisé en ce que** la seconde paroi (305) du becquet amont (310) est radialement positionnée au même niveau que le bulbe (120) de l'aube ou à un niveau inférieur du bulbe (120) de l'aube (100).

6. Rotor pour turbomachine selon l'une des revendications 4 à 5 **caractérisé en ce que** chacune des plates-formes comporte :
• une ouverture (315, 415) au niveau de ladite première paroi sensiblement radiale (304, 404) du becquet (305, 405);
• une paroi latérale (303, 403) orientée sensiblement radialement, située à une extrémité opposée du becquet (305) ;
chacune des parois latérales (303) d'une série de plates-formes étant adaptée pour coopérer avec l'évidement de l'autre série de plates-formes.

7. Rotor pour turbomachine selon l'une des revendications précédentes **caractérisé en ce que** les plates-formes sont métalliques.

8. Rotor pour turbomachine selon l'une des revendications précédentes **caractérisé en ce que** les aubes sont métalliques.

9. Rotor pour turbomachine selon l'une des revendications précédentes **caractérisé en ce qu'**il comporte un jonc annulaire fendu (500) maintenu en position axiale par une bride annulaire, ladite pluralité de plates-formes rapportées (300, 400) comportant des moyens de maintien axial (421) agencés pour coopérer avec ledit joint annulaire fendu (500) de manière à bloquer les déplacements axiaux desdites plates-formes (300, 400).

10. Turbomachine **caractérisée en ce qu'**elle comporte un rotor selon l'une des revendications précédentes.

## Patentansprüche

1. Rotor für Turbomaschine, umfassend:
- eine Scheibe, die an ihrer Peripherie Zellen aufweist, bezeichnet als primäre Zellen;
- eine Vielzahl von Schaufeln (100), die einen Fuß (110) aufweisen, der am unteren Teil durch einen Wulst (120) gebildet ist, welcher in den genannten primären Zellen verriegelt ist
- eine Frontplatte (310, 410), die sich deutlich axial erstreckt, wobei die genannte Frontplatte einen ringförmigen Sektor bildet, der gegenüber von mindestens zwei konsekutiven Schaufeln angeordnet ist;
- eine Vielzahl von versetzten Plattformen (300, 400), von denen jede zwischen zwei konsekutiven Schaufeln (100) angeordnet ist;
wobei der genannte Rotor **dadurch gekennzeichnet ist, dass** die genannten Plattformen (300, 400) aufweisen:
- eine deutlich rechteckige Platte (301, 401) und einen Wulst (302, 402), der sich radial unter der Platte (301, 401) erstreckt, wobei der genannte Wulst (302, 402) in sekundären Zellen verriegelt ist, die an der Peripherie der Scheibe angeordnet sind, wobei die sekundären Zellen zwischen zwei konsekutiven primären Zellen positioniert sind.

2. Rotor für Turbomaschine gemäß dem voranstehenden Auftrag, **dadurch gekennzeichnet, dass** die genannten Plattformen geformt sind durch:
- eine erste Serie (300), bezeichnet als vorgeschaltete Plattformen, die eine vorgeschaltete Frontplatte (310) aufweisen, die sich deutlich axial nach oben erstreckt, wobei die genannte vorgeschaltete Frontplatte (310) einen ringförmigen Abschnitt formt, der gegenüber von wenigstens zwei konsekutiven Schaufeln angeordnet ist;
- eine zweite Serie (400), bezeichnet als nachgeschaltete Plattformen, die eine nachgeschaltete Frontplatte (410) aufweisen, die sich deutlich axial nach unten erstreckt, wobei die genannte nachgeschaltete Frontplatte (410) einen ringförmigen Abschnitt formt, der gegenüber von wenigstens zwei konsekutiven Schaufeln angeordnet ist;
wobei die zwei Plattformserien (300, 400) alternativ in den sekundären Zellen positioniert sind.

3. Rotor für Turbomaschine gemäß einem der voranstehenden Ansprüche, **dadurch gekennzeichnet, dass** jede der Plattformen umfasst:
- einen ersten lateralen, geradlinigen Rand, der den Fuß einer ersten Schaufel umgibt, die eine geradlinige Einfassung aufweist,
- einen zweiten lateralen, geradlinigen Rand, der den Fuß einer zweiten konsekutiven Schaufel umgibt, der eine geradlinige Einfassung aufweist.

4. Rotor für Turbomaschine gemäß den Ansprüchen 2 und 3, **dadurch gekennzeichnet, dass** die vorgeschalteten Frontplatten (310) der vorgeschalteten Plattformen (300) und die nachgeschalteten Frontplatten (410) der nachgeschalteten Plattformen (400) durch eine erste, deutlich radiale, an die Platte (301, 401) angeschlossene Wand (304, 404) und durch eine zweite, deutlich axiale Wand (305, 405) geformt sind.

5. Rotor für Turbomaschine gemäß Anspruch 4, **dadurch gekennzeichnet, dass** die zweite Wand (305) der vorgeschalteten Frontplatte (310) auf demselben Niveau wie der Wulst (120) der Schaufel oder auf einem unteren Niveau des Wulstes (120) der Schaufel (100) radial positioniert ist.

6. Rotor für Turbomaschine gemäß einem der Ansprüche 4 bis 5, **dadurch gekennzeichnet, dass** jede der Plattformen umfasst:
• eine Öffnung (315, 415) auf der Höhe der genannten ersten, deutlich radialen Wand (304, 404) der Frontplatte (305, 405);
• eine laterale Wand (303, 403), die deutlich radial ausgerichtet ist und sich an einem entgegengesetzten Ende der Frontplatte (305) befindet;
wobei jede der lateralen Plattformen (303) einer Plattformserie geeignet ist, um mit der Ausnehmung der anderen Plattformserie zusammenzuwirken.

7. Rotor für Turbomaschine gemäß einem der voranstehenden Ansprüche, **dadurch gekennzeichnet, dass** die Plattformen metallisch sind.

8. Rotor für Turbomaschine gemäß einem der voranstehenden Ansprüche, **dadurch gekennzeichnet, dass** die Schaufeln metallisch sind.

9. Rotor für Turbomaschine gemäß einem der voranstehenden Ansprüche, **dadurch gekennzeichnet, dass** er eine geschlitzte, ringförmige Hülse (500) umfasst, die in axialer Position durch einen ringförmigen Flansch gehalten wird, wobei die genannte Vielzahl von versetzten Plattformen (300, 400) axiale Haltemittel (421) umfasst, die angeordnet sind, um mit der genannten geschlitzten ringförmigen Dichtung (500) derart zusammenzuwirken, dass die axialen Verschiebungen der genannten Plattformen (300, 400) blockiert werden.

10. Turbomaschine, **dadurch gekennzeichnet, dass** sie einen Rotor gemäß einem der voranstehenden Ansprüche umfasst.

## Claims

1. Rotor for turbine engine comprising:
- a disk with cavities around its periphery called primary cavities;
- a plurality of blades (100) with a root (110) composed of a bulb (120) in its lower part locked in said primary cavities;
- a plurality of platform inserts (300, 400), each being located between two consecutive blades (100);
said rotor being **characterised in that** said platforms (300, 400) are provided with:
- an approximately straight plateau (301, 401) and a bulb (302, 402) extending radially under the plateau (301, 401), said bulb (302, 402) being locked in secondary cavities arranged at the periphery of the disk, the secondary cavities being positioned between two consecutive primary cavities;
- a retaining bracket (310, 410) approximately along the axial direction, said retaining bracket (310, 410) forming an annular sector arranged facing at least two consecutive blades.

2. Rotor for turbine engine according to the previous claim, **characterised in that** said platforms are formed by:
- a first series (300) called upstream platforms with an upstream retaining bracket (310) extending approximately along the upstream axial direction, said upstream retaining bracket (310) forming an angular sector placed facing at least two consecutive blades;
- a second series (400) called downstream platforms with a downstream retaining bracket (410) extending approximately along the downstream axial direction, said downstream retaining bracket (410) forming an angular sector placed facing at least two consecutive blades;
the two series of platforms (300, 400) being positioned alternately in the secondary cavities.

3. Rotor for turbine engine according to one of the previous claims, **characterised in that** each of the platforms comprises:
- a first straight lateral edge that matches the root of a first blade with a straight side,
- a second straight lateral edge that matches the root of a second consecutive blade with a straight side.

4. Rotor for turbine engine according to claims 2 and 3 **characterised in that** the upstream retaining brackets (310) of the upstream platforms (300) and the downstream retaining brackets (410) of the downstream platforms (400) are formed by a first approximately radial wall (304, 404) connected to the plateau (301, 401) and by a second approximately axial wall (305, 405).

5. Rotor for turbine engine according to claim 4 **characterised in that** the second wall (305) of the upstream retaining bracket (310) is radially positioned at the same level as the bulb (120) of the blade or at a lower level than the bulb (120) of the blade (100).

6. Rotor for turbine engine according to one of claims 4 to 5, **characterised in that** each of the platforms comprises:
• an opening (315, 415) in said first approximately radial wall (304, 404) of the retaining bracket (305, 405);
• a lateral wall (303, 403) oriented approximately radially, located at an end opposite the retaining bracket (305);
each of the lateral walls (303) of a series of platforms being adapted to cooperate with the recess in the other series of platforms;

7. Rotor for turbine engine according to one of the previous claims, **characterised in that** the platforms are metallic:

8. Rotor for turbine engine according to one of the previous claims, **characterised in that** the blades are metallic:

9. Rotor for turbine engine according to one of the previous claims, **characterised in that** it comprises an annular split ring (500) retained in the axial position by an annular flange, said plurality of platform inserts (300, 400) comprising axial retaining means (421) arranged to cooperate with said annular split ring so as to block axial displacements of said platforms (300, 400).

10. Turbomachine **characterised in that** it comprises a rotor according to one of the previous claims.
